# EUROPÄISCHE PATENTSCHRIFT

(11) **EP 0 881 262 B1**
(45) Veröffentlichungstag und Bekanntmachung des Hinweises auf die Patenterteilung: **19.11.2003**
(21) Anmeldenummer: 98810482.4
(22) Anmeldetag: 22.05.1998
(51) Int. Cl.: C08L 63/00, C08K 5/109, C09D 163/00, C09D 167/00, C09D 133/06, C08L 33/00, C08L 67/00

(54) **Härtbare Zusammensetzung auf Basis von freie Carboxylgruppen enthaltenden Polymeren**
Curable composition on the basis of polymers containing free carboxylic groups
Composition durcissable sur la base de polymères contenant des groupes carboxyliques

(30) Priorität: 30.05.1997 CH 127697
(43) Veröffentlichungstag der Anmeldung: 02.12.1998
(73) Patentinhaber: Vantico AG, 4057 Basel (CH)
(72) Erfinder: Frischinger, Isabelle, 68640 Riespach (FR); Cotting, Jacques-Alain, 1729 Bonnefontaine (CH); Finter, Jürgen, 79102 Freiburg (DE); François, Jacques, 68300 Saint Louis (FR)
(74) Vertreter: Dannappel, Hans-Jochen, Dr.

(56) Entgegenhaltungen:
- EP-A- 0 421 666
- EP-A- 0 697 440
- WO-A-97/24408

## Beschreibung

Die Erfindung betrifft eine härtbare Zusammensetzungen auf Basis von (A) freie Carboxylgruppen aufweisenden Polymeren und (B) einem Vernetzungsmittel für die Komponente (A) sowie ein Verfahren zur Lackierung von Gegenständen unter Verwendung einer derartigen Zusammensetzung.

In der EP-A-0 697 440 ist bereits eine der vorgenannten Zusammensetzungen besehrieben. Diese enthält als Komponente (A) ein Gemisch aus (A1) mindestens einem Polymer auf Basis von Acrylat- und/oder Methacrylatmonomeren, das durchschnittlich 0,1 bis 4,0 Äquivalente freie Carboxylgruppen pro Kilogramm Polymer aufweist, und (A2) mindestens einem carboxylterminierten Polyester, der durchschnittlich 0,2 bis 6 Äquivalente freie Carboxylgruppen pro Kilogramm Polyester aufweist, wobei Bestandteil (A1) 50 bis 90 Gewichtsprozent und Bestandteil (A2) den Rest der Komponente (A) ausmachen. Als Vernetzungsmittel (B) für die Komponente (A) enthält die genannte Zusammensetzung eines oder mehrere Epoxidharze mit zwei oder mehr als zwei Epoxidgruppen pro Molekül, ausgewählt aus Glycidylestem cyclischer Carbonsäuren, Glycidylethern von Trimethylolpropan, Glycidylethern von Bis(dimethylolpropyl)ether sowie Umsetzungsprodukten von Glycidyletherderivaten von Trimethylolpropan oder Bis(dimethylolpropyl)ether mit aliphatischen oder cycloaliphatischen Polyisocyanatmonomeren oder -oligomeren, wobei das molare Verhältnis von freien Carboxylgruppen zu Epoxidgruppen in der Zusammensetzung 0,3 bis 3 beträgt. Schliesslich enthalten die Zusammensetzungen noch (C) einen Katalysator zur Beschleunigung der Vemetzungsreaktion zwischen Komponente (A) und Komponente (B) der Zusammensetzung sowie (D) ein inertes Lösungsmittel. Die genannten Zusammensetzungen weisen unter anderem gute verarbeitungstechnische Eigenschaften auf und führen zu Beschichtungen mit guten Haltbarkeitseigenschaften. Nachteilig ist jedoch, dass diese Zusammensetzungen auch bei mässigen Temperaturen nur wenig lagerstabil sind und somit in der Praxis nur als Zweikomponentenzusammensetzungen eingesetzt werden können.

In der JP-A-Hei 4-161465 sind lösungsmittelfreie härtbare Zusammensetzungen (Pulverlacke) beschrieben, die ein Vinylpolymer, das mindestens zwei 2-Oxo-1,3-dioxolan-4-yl-Gruppen aufweist, eine freie Carboxylgruppen enthaltende Verbindung, z. B. ein carboxylterminiertes Polyesterharz, und einen Katalysator zur Beschleunigung der Vernetzungsreaktion der Zusammensetzungsbestandteile enthalten. Die Zusammensetzungen sind bei niedrigen Temperaturen härtbar und werden als besonders lagerungsstabil beschrieben, können beispielsweise als Einkomponentenbeschichtungsmittel Verwendung finden. Das 2-Oxo-1,3-dioxolan-4-yl-Gruppen enthaltende Vinylpolymer soll gemäss dieser Druckschrift ein Molekulargewicht (Zahlenmittel) von mindestens 800 aufweisen, da sich andernfalls keine Zusammensetzungen mit guten anwendungstechnischen Eigenschaften ergeben.

Überraschenderweise hat sich nun gezeigt, dass härtbare Zusammensetzungen auf Basis von (A) freie Carboxylgruppen aufweisenden Polymeren und (B) einem Vemetzungsmittel für die Komponente (A) mit ebenfalls sehr guten Eigenschaften erhältlich sind, wenn als Vernetzungsmittel Verbindungen mit einem Molekulargewicht von weniger als 800 verwendet werden, die mindestens zwei (2-Oxo-1,3-dioxolan-4-yl)methyl-Gruppen pro Molekül enthalten.

Gegenstand der vorliegenden Erfindung bildet eine härtbare Zusammensetzung, die folgende Bestandteile enthält:
(A) eine Polymerkomponente, bestehend aus einem oder mehreren der folgenden Bestandteile:
   Polymere auf Basis von Acrylat- und/oder Methacrylatmonomeren, die freie Carboxylgruppen aufweisen, und
   carboxylterminierte Polyester;
(B) ein Vernetzungsmittel für die Komponente (A) ausgewählt der Gruppe bestehend aus:
   (B1) einer oder mehr als einer Verbindung mit einem Molekulargewicht von weniger als 800, die mindestens zwei (2-Oxo-1,3-dioxolan-4-yl)methyl-Gruppen pro Molekül enthält, und
   (B2) einem Gemisch aus einer oder mehr als einer Verbindung mit einem Molekulargewicht von weniger als 800, die mindestens zwei (2-Oxo-1,3-dioxolan-4-yl)-methyl-Gruppen pro Molekül enthält, mit einem oder mehr als einem Epoxidharz, wobei zumindest 60 Prozent der Gesamtanzahl von (2-Oxo-1,3-dioxolan-4-yl)-methyl- und Epoxidgruppen des Gemisches (2-Oxo-1,3-dioxolan-4-yl)methyl-Gruppen sind;
(C) einen Katalysator zur Beschleunigung der Vemetzungsreaktion zwischen den Komponenten (A) und (B) und
(D) ein Lösungsmittel für die Komponenten (A), (B) und (C); Gesamtanzahl an (2-Oxo-1,3-wobei das molare Verhältnis von freien Carboxylgruppen zur Gesamtanzahl an (2-Oxo-1,3-dioxolan-4-yl)methyl- und Epoxidgruppen in der Zusammensetzung 0,3 bis 3 beträgt.

Die erfindungsgemäss als Vernetzungsmittel verwandten Poly[(2-oxo-1,3-di-oxolan-4-yl)methyl]-Verbindungen weisen bevorzugt die Formel (I) auf:

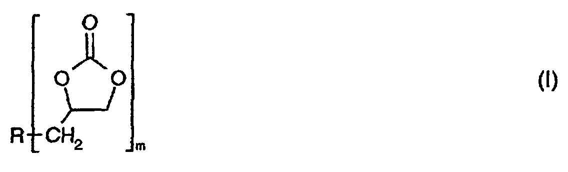

In Formel (I) bedeutet R eine Gruppe der Formel (II):

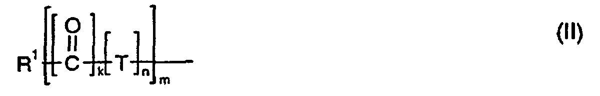

Die Indices k und n sind unabhängig voneinander gleich 0 oder 1; m ist eine ganze Zahl, die gleich 2 oder grösser als 2 ist, während T in jeder der m Gruppen der Formel 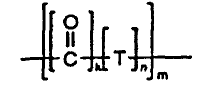 unabhängig voneinander einer Gruppe der Formel -O-, -NH- oder -N< entspricht und R¹ für einen m-wertigen organischen Rest steht, der ein Molekulargewicht von 28 bis 800 minus m. (101 + 28·k + MG_{T}·n), bevorzugt von 28 bis 600 minus m·(101 + 28·k + MG_{T}·n) aufweist, wobei MG_{T} dem mittleren Molekulargewicht der Gruppen T entspricht. Der Rest R¹ kann insbesondere Kohlenstoff- und Wasserstoffatome sowie gegebenenfalls Sauerstoffund/oder Stickstoffatome umfassen.

Bevorzugte Beispiele für Poly[(2-oxo-1,3-di-oxolan-4-yl)methyl]-Verbindungen, die sich als Vemetzungsmittel für die erfindungsgemässen Zusammensetzungen eignen, sind unter anderem (2-Oxo-1,3-dioxolan-4-yl)methylester von gerad- oder verzweigtkettigen sowie von cyclischen Polycarbonsäuren, z. B von aliphatischen Dicarbonsäuren, insbesondere von aliphatischen C₃-C₁₂-Dicarbonsäuren, wie z. B. von Malonsäure, Bemsteinsäure, Glutarsäure, Adipinsäure, Pimelinsäure oder Sebacinsäure. Unter (2-Oxo-1,3-dioxolan-4-yl)methylester cyclischer Polycarbonsäuren werden in dieser Anmeldung Poly[(2-oxo-1,3-dioxolan-4-yl)]methylester von Carbonsäuren mit mindestens zwei Carboxylgruppen verstanden, deren Molekül zumindest ein Ringsystem, vorzugsweise von 5 bis 14 Ringkohlenstoffatomen, umfasst. Die Carboxylgruppen können hierbei sowohl direkt an ein Atom eines Ringsystems gebunden sein, wie z. B. bei Polycarbonsäurederivaten von Benzol oder Naphthalin. Ebenso können die Carboxylgruppen aber auch an Atome nicht cyclischer Strukturelemente des Carbonsäuremoleküls gebunden sein, wie z. B im Falle von o-, m-oder p-Phenylendiessigsäure. Geeignete Carbonsäuren können nur ein Ringsystem, aber auch zwei oder mehrere Ringsysteme in ihrem Molekül enthalten, die annelliert oder über geeignete Atomgruppen verknüpft sind, beispielsweise über eine Gruppe einer der nachstehenden Formeln: 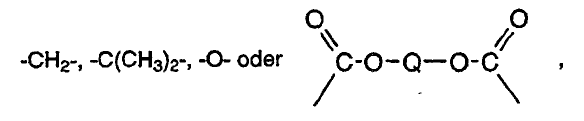 worin Q einen 2-wertigen organischen Rest mit 2 bis 15 Kohlenstoffatomen bedeutet. Beispiele für erfindungsgemäss geeignete Poly[(2-oxo-1,3-dioxolan-4-yl)methyl]ester cyclischer Polycarbonsäuren umfassen die entsprechenden Ester von Dicarbonsäuren, beispielsweise von Phthalsäure, Isophthalsäure, Terephthalsäure, 2,5-Dimethylphthalsäure, von Naphthalin-2,6-dicarbonsäure, Naphthalin-1,8-dicarbonsäure, Naphthalin-2,3-dicarbonsäure, von Diphenylether-4,4'-dicarbonsäure, Diphenyl-2,2'-dicarbonsäure, von Tetrachlorphthalsäure, 2,5-Dichlorphthalsäure, von Tetrahydrophthalsäure, Methyltetrahydrophthalsäure, Hexahydrophthalsäure, Methylhexahydrophthalsäure, von Endomethylenhexahydrophthalsäure, Hexahydroterephthalsäure, Hexahydroisophthalsäure, Thiophen-2,5-dicarbonsäure, Furan-2,5-dicarbonsäure, Furan-3,4-dicarbonsäure, Pyrazin-3,4-dicarbonsäure, oder von höherfunktionellen Carbonsäuren, wie von 1,2,3-Benzoltricarbonsäure (Hemimellitsäure), 1,2,4-Benzoltricarbonsäure (Trimellitsäure), 1,3,5-Benzoltricarbonsäure (Trimesinsäure), 1,2,3,4-Benzoltetracarbonsäure (Mellophansäure), 1,2,4,5-Benzoltetracarbonsäure (Pyromellitsäure), 1,2,3,5-Benzoltetracarbonsäure, Benzolpentacarbonsäure und Benzolhexacarbonsäure (Mellitsäure), Naphthalintetracarbonsäure, Perylentetracarbonsäure oder von Tetracarbonsäuren der nachstehenden Formel: 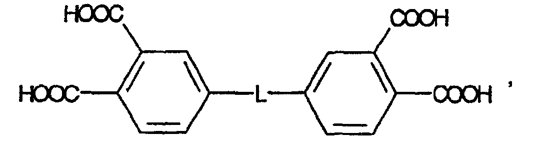 worin L für -CH₂-, -C(CH₃)₂- oder -O- steht, insbesondere von Benzophenon-3,3',4,4'-tetracarbonsäure, sowie von Derivaten der genannten Säuren, die teilweise oder vollständig hydrierte Kohlenstoffringe aufweisen.

Zu den bevorzugten für die vorliegende Erfindung geeigneten Poly[(2-oxo-1,3-dioxolan-4-yl)methyl]-Verbindungen zählen weiterhin entsprechende Ether, d. h. Verbindungen der obigen Formel (I), wobei R einen Rest der Formel (II) darstellt, worin k gleich 0 und n gleich 1 sind und worin R¹ eine gerad- oder verzweigtkettige oder cyclische m-wertige organische Gruppe darstellt. Unter dem Begriff "cyclische Gruppe" werden hierbei analog zur obigen Definition von cyclischen Polycarbonsäuren alle Gruppen verstanden, die mindestens ein Ringsystem umfassen. Zu den bevorzugten Beispielen von Poly[(2-oxo-1,3-dioxolan-4-yl)methyl]ethern, die als Vemetzungsmittel für die erfindungsgemässen Zusammensetzungen geeignet sind, gehören 1,4-Bis-(2-oxo-1,3-dioxolan-4-yloxy)butan, 2,2-Bis-(2-oxo-1,3-dioxolan-4-yloxymethyl)-1-(2-oxo-1,3-dioxolan-4-yloxy)butan, 1-[2,2-Bis-(2-oxo-1,3-dioxolan-4-yloxymethyl)butoxy]-2-(hydroxymethyl)-2-(2-oxo-1,3-dioxolan-4-yloxymethyl)butan und Bis-(2-oxo-1,3-dioxolan-4-yloxymethyl)cyclohexan.

Poly[(2-oxo-1,3-dioxolan-4-yl)methyl]-Verbindungen, wie die oben genannten, lassen sich nach üblichen, dem Fachmann bekannten Methoden herstellen, beispielsweise gemäss der US-A-4,835,289, indem man die entsprechende Polyglycidylverbindung unter strömendem Kohlendioxidgas bei Normaldruck in Gegenwart eines geeigneten Katalysators, wie Kaliumiodid oder Tetrabutylammoniumiodid, auf Temperaturen von etwa 130 bis 150°C erhitzt. Gegebenenfalls kann anstatt bei Normaldruck auch unter erhöhtem Druck gearbeitet werden, z. B. unter einem CO₂-Druck von 0,1 bis 1 MPa. Die genannte Reaktion verläuft gemäss folgendem Schema, worin m und R die oben schon genannte Bedeutung haben:

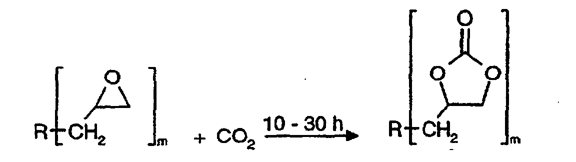

Besonders bevorzugte Zusammensetzungen gemäss der vorliegenden Erfindung sind dadurch gekennzeichnet, dass es sich bei der Verbindung der Formel (I) um eine Verbindung handelt, ausgewählt aus:
(2-Oxo-1,3-dioxolan-4-yl)methylestern aliphatischer Dicarbonsäuren mit 4 bis 8 Kohlenstoffatomen,
(2-Oxo-1,3-dioxolan-4-yl)methylestern von Benzoldi- oder Benzoltricarbonsäuren,
(2-Oxo-1,3-dioxolan-4-yl)methylestern von Cyclohexandi- und Cyclohexantricarbonsäuren;
1,4-Bis-(2-oxo-1,3-dioxolan-4-yloxy)butan,
2,2-Bis-(2-oxo-1,3-dioxolan-4-yloxymethyl)-1-(2-oxo-1,3-dioxolan-4-yloxy)butan,
1-[2,2-Bis-(2-oxo-1,3-dioxolan-4-yloxymethyl)butoxy]-2-(hydroxymethyl)-2-(2-oxo-1,3-dioxolan-4-yloxymethyl)butan, und
Bis-{[(2-oxo-1,3-dioxolan-4-yl)methyl]oxymethyl}cyclohexan.

Enthält die Zusammensetzung als Vemetzungsmittel für die Komponente (A) ein Gemisch (B2) aus einer oder mehr als einer Verbindung mit einem Molekulargewicht von weniger als 800, die mindestens zwei (2-Oxo-1,3-dioxolan-4-yl)methyl-Gruppen pro Molekül enthält, mit einem oder mehr als einem Epoxidharz, so ist die Auswahl des Epoxidharzes zwar nicht kritisch und prizipiell beliebig, solange es in der verwendeten Menge im Lösungsmittel (D) löslich ist, vorzugsweise handelt es sich bei dem Epoxidharz jedoch um die der verwendeten Poly[(2-Oxo-1,3-dioxolan―4-yl)methyl]-Komponente entsprechende Epoxidkomponente, also um die Epoxidharzkomponente, aus dem die verwendete Poly[(2-oxo-1,3-dioxolan-4-yl)methyl]-Komponente gemäss dem oben beschriebenen Reaktionsschema erhältlich ist.

Der Einsatz eines Gemisches (B2) als Vemetzungsmittel kann insbesondere dann von Vorteil sein, wenn es erforderlich ist, die Reaktivität der erfindungsgemässen Zusammensetzungen in bestimmter Weise einzustellen.

Die Polymerkomponente (A) besteht aus einem oder mehreren der folgenden Bestandteile: freie Carboxylgruppen aufweisenden Polymeren auf Basis von Acrylat- und/oder Methacrylatmonomeren und carboxylterminierten Polyestern.

Bei den freie Carboxylgruppen aufweisenden Polymeren auf Basis von Acrylat- und/oder Methacrylatmonomeren handelt es sich bevorzugt um Copolymere von einem oder mehreren Acrylsäure- und/oder Methacrylsäureestern, bevorzugt von den entsprechenden Alkylestern mit 1 bis 8 Kohlenstoffatomen in der Alkylgruppe, mit Acrylsäure und/oder Methacrylsäure und gegebenenfalls weiteren ethylenisch ungesättigten Comonomeren. Die Copolymere weisen bevorzugt ein Molekulargewicht (Gewichtsmittel Mw) von 1000 bis 30000 auf. Ihre Glasübergangstemperatur liegt zweckmässigerweise über 20°C und bevorzugt über 30°C. Beispiele für geeignete (Meth)acrylsäureestermonomere sind Ethylacrylat, Butylacrylat, 2-Ethylhexylacrylat, sowie insbesondere C₁-C₄-Alkylmethacrylate, wie Methylmethacrylat, Ethylmethacrylat oder Butylmethacrylat. (Meth)acrylatderivate, die Silangruppen enthalten können ebenfalls eingesetzt werden. Als ethylenisch ungesättigte Comonomere kommen beispielsweise Acrylamine und Acryl- oder Methacrylnitrile sowie Vinylverbindungen in Frage. Bevorzugte Comonomere sind Vinylaromaten, insbesondere Styrol. Ganz besonders bevorzugt wird ein Copolymer von Methacrylsäure, Methacrylsäure-C₁-C₄-alkylestern und Styrol. Die oben genannte Polymere können in bekannter Weise hergestellt werden, z. B. durch Polymerisation der in geeigneten organischen Lösungsmitteln, insbesondere in Toluol oder in Gemischen aus 1-Methoxy-2-propanol, 1-Methoxy-2-propylacetat und Methylisobutylketon (beispielsweise im Gewichtsverhältnis von 70/20/10), gelösten Monomeren in Gegenwart eines geeigneten Initiators, wie z. B. Dicumylperoxid, und eines Kettenübertragungsreagenzes, wie Thioglycolsäure.

Die carboxylterminierten Polyester für die Polymerkomponente (A) weisen zweckmässig ein Molekulargewicht (Gewichtsmittel Mw) von 500 bis 5000, bevorzugt bis zu 3000, insbesondere bis zu 2000 auf. Die Polyester sind bevorzugt bei Raumtemperatur fliessfähig, ihre Glasübergangstemperatur liegt daher vorzugsweise unter 30°C.

Besonders bevorzugt stellt die Polymerkomponente (A) ein Gemisch dar, bestehend aus:
(A1) mindestens einem Polymer auf Basis von Acrylat- und/oder Methacrylatmonomeren, das durchschnittlich 0,1 bis 4,0 Äquivalente freie Carboxylgruppen pro Kilogramm Polymer aufweist, und
(A2) mindestens einem carboxylterminierten Polyester, der durchschnittlich 0,2 bis 6 Äquivalente freie Carboxylgruppen pro Kilogramm Polyester aufweist
Zweckmässig bilden hierbei der Bestandteil (A1) 50 bis 90 Gewichtsprozent und der Bestandteil (A2) den Rest der Polymerkomponente (A).

Besonders bevorzugte Polyester für die Polymerkomponente (A) sind Halbester aus einer aliphatischen oder cycloaliphatischen 1,2-Dicarbonsäure und einem Polyesterpolyol oder einem Polylactonpolyol, die jeweils mindestens 2 terminale Hydroxylgruppen aufweisen. Diese Halbester weisen die nachstehende Molekularstruktur auf: 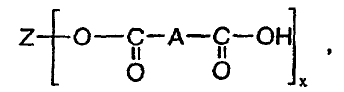 wobei Z den Rest eines Polyester- oder Polylactonpolyols der Formel Z(OH)ₓ ohne seine terminalen Hydroxylgruppen darstellt, A den Rest einer von ihren 1,2-ständigen Carboxylgruppen befreiten 1,2-Carbonsäure der Formel A(COOH)₂ symbolisiert, mit der oder mit derem esterbildenden Derivat das Polyol umgesetzt wurde, und x eine ganze Zahl von mindestens 2 ist. Die Obergrenze für x liegt bevorzugt bei 4. Ganz besonders bevorzugt ist für x der Wert 2 oder 3. Besonders gut geeignet sind Halbester auf Basis von Bemsteinsäure und insbesondere von cycloaliphatischen Carbonsäuren, besonders von Hexahydrophthalsäure oder Hexahydrotrimellitsäure, als Säurekomponente.

Als Polyesterpolyole für die Herstellung der carboxylterminierten Polyester können z. B. Umsetzungsprodukte von polyfunktionellen Carbonsäuren, insbesondere cycloaliphatischen oder aliphatischen, wie beispielsweise Hexahydroisophthalsäure, Hexahydroterephthalsäure, Hexahydrophthalsäure, Bernsteinsäure, Glutarsäure, Adipinsäure, Pimelinsäure, Suberinsäure (Korksäure), Azelainsäure, Sebacinsäure, mit einem Überschuss an aliphatischen Polyolen eingesetzt werden, insbesondere Di- und Triolen, wie beispielsweise Ethylenglycol, Propylenglycol, 1,3-Butandiol, 1,4-Butandiol, Neopentandiol, Isopentanglycol, 1,6 Hexandiol, 1,7-Heptandiol, 1,8-Octandiol, Glycerin, Trimethylolethan, Trimethylolpropan oder Cyclohexandiol verwendet werden. Bevorzugt werden sowohl lineare aliphatische Dicarbonsäuren als auch lineare aliphatische Diole von jeweils 5 bis 8 Methylengruppen in der aliphatischen Kette. Polyester dieser Art sind auch kommerziell erhältlich, z. B. unter der Markenbezeichnung K-Flex®188 und 148 von King Industries.

Zur Herstellung der carboxylterminierten Polyester für die erfindungsgemässen Zusammensetzungen können als Polyole Z(OH)ₓ günstig auch bestimmte Polylactonpolyole zum Einsatz kommen, nämlich Verbindungen der Formel: 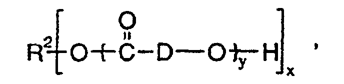 wobei R² dem Rest eines x-wertigen als Initiator für die Lactonpolymerisierung verwendeten cyclischen oder acyclischen Polyols R²(OH)ₓ ohne seine Hydroxylgruppen darstellt, x eine der oben für x schon genannte Bedeutung hat, y Eins oder eine ganze Zahl grösser als 1, bevorzugt von 1 bis 20, insbesondere von 1 bis 10 bedeutet und D einer Alkylengruppe der Struktur 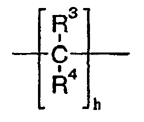 mit insgesamt maximal 12 Kohlenstoffatomen entspricht, wobei die Reste R³ und R⁴ unabhängig voneinander ein Wasserstoffatom oder einen C₁-C₃-Alkylrest darstellen und h eine ganze Zahl von 5 bis 8 ist. Polylactone der genannten Art sind bekannt und z. B. in der GB-A-2 160 534 beschrieben, deren Inhalt als Bestandteil dieser Beschreibung zu betrachten ist. Besonders bevorzugt ist h gleich 5 und sind R³ und R⁴ beide ein Wasserstoffatom. Derartige Polycaprolactone sind unter dem Handelsnamen CAPA® von Interox Chemicals Ltd. auch kommerziell erhältlich.

Die am meisten bevorzugten carboxylterminierten Polyester sind die Halbester aus hydroxylterminierten Polycaprolactonen und cis-Hexahydrophthalsäureanhydrid.

Die erfindungsgemässen Zusammensetzungen enthalten ausserdem einen Katalysator zur Beschleunigung der thermischen Reaktion von (2-Oxo-1,3-di-oxolan-4-yl)methyl-Gruppen und Carboxylgruppen, der eine ausreichend schnelle Härtungsreaktion bei Temperaturen im Bereich ab 100°C ermöglicht. Im allgemeinen handelt es sich bei dem Katalysator um ein organisches Amin oder ein Derivat eines Amins, insbesondere um ein tertiäres Amin oder eine stickstoffhaltige heterocyclische Verbindung. Bevorzugter Katalysator ist 1,8-Diazabicyclo[5,4,0]-7-undecen. Sehr gut geeignete Katalysatorverbindungen sind auch Onium-Salze, wie z. B. Tributylammoniumbromid oder Ethylentriphenylphosphoniumbromid. Der Katalysator oder ein Katalysatorgemisch wird zweckmässig in einer Menge von etwa 3 bis 10, insbesondere von 3 bis 6 Gewichtsprozent zugesetzt.

Beispiele für geeignete inerte Lösungsmittel sind Xylole, Butylacetat, Isobutanol, 1-Methoxy-2-propanol, 1-Methoxy-2-propylacetat, γ-Butyrolacton und Methylisobutylketon (MIBK). Besonders bevorzugt ist ein Lösungsmittelgemisch aus 1-Methoxy-2-propanol, 1-Methoxy-2-propylacetat und MIBK, bevorzugt im Gewichtsverhältnis von etwa 70 zu 20 zu 10. Die erfindungsgemässen Zusammensetzungen können mit relativ wenig inertem Lösungsmittel hergestellt werden und weisen daher bevorzugt einen hohen Festkörpergehalt, beispielsweise im Bereich von 40 bis 70 Gewichtsprozent auf.

Die erfindungsgemässen Zusammensetzungen können ausser den genannten noch weitere Bestandteile enthalten, die für Lackfarben üblich sind, z. B. Pigmente, Aufheller, Lichtschutzmittel, Antioxidationsmittel, Verlaufsmittel, Haftmittel, Thixotropiermittel, Reaktivverdünner, z. B. auf Basis flüssiger Anhydride, wie z. B. Alkylhexahydrophthalsäureanhydrid, bevorzugt Methylhexahydrophthalsäureanhydrid, u. s. w.

Die erfindungsgemässen Zusammensetzungen weisen eine ausgezeichnete Lagerstabilität auf. So ändert sich beispielsweise die Viskosität der Zusammensetzungen während einer zehntägigen Lagerung bei 60°C im allgemeinen nicht, ebenso wie während einer einwöchigen Lagerung bei 80°C.

Die erfindungsgemässen Zusammensetzungen können beispielsweise als Überzugsmittel, Giessharz, Imprägnierharz, Laminierharz, Klebstoff oder Dichtmaterial Anwendung finden. Wegen ihrer guten Lagerstabilität eignen sie sich insbesondere für den Einsatz in Einkomponentenform. Besonders bevorzugt ist die Verwendung der erfindungsgemässen Zusammensetzungen als Automobillack, wobei sie beispielsweise als Grundierlack (Primer) oder, gefüllt mit Pigmenten und/oder Farbstoffen, als farbgebender Basislack sowie unpigmentiert als klarer Decklack verwendet werden können. Erfindungsgemässe Zusammensetzungen sind z. B. für die Erstlackierung der Autos beim Hersteller geeignet (Original Equipment Manufacturing), wobei zweckmässig Einbrenntemperaturen von etwa 100 bis 200°C angewandt werden.

Die Erfindung hat daher auch ein Verfahren zur Lackierung von Gegenständen, insbesondere von Automobilteilen, zum Gegenstand, bei dem der Gegenstand mit einer erfindungsgemässen Zusammensetzung beschichtet wird und die Beschichtung getrocknet und bei einer Temperatur von 100 bis 200°C, vorzugsweise von 120 bis 180°C, gehärtet wird.

Falls in den Beispielen nicht anders angegeben, sind Prozentangaben als Gewichtsprozente zu verstehen. Zu den Beispielen gehörende identische Fussnoten haben für alle Beispiele identische Bedeutung, wenn nichts anderes angegeben.

### Beispiel 1: Herstellung eines Copolymers auf Basis von Methacrylatmonomeren (Methacrylatkomponente 1)

| Monomerenbeschickung: | Gewichtsteile [g] |
|---|---|
| - Methacrylsäure (MAA) | 30 |
| - Styrol (St) | 20 |
| - Methylmethacrylat (MMA) | 30 |
| - Butylmethacrylat (BuMA) | 120 |
| - Dicumylperoxid (Initiator) | 3,0 |
| - Thioglycolsäure (Kettenübertragungsmittel) | 3,5 |

| Vorlage: | |
|---|---|
| - Toluol | 60 Milliliter |
| - Dicumylperoxid (Initiator) | 3,0 g |
| - Thioglycolsäure (Kettenübertragungsmittel) | 3,5 g |

Das als Monomerenbeschickung dienende Gemisch wird mit einer 4%-igen Natriumhydroxid- und einer 20%-igen Natriumchloridlösung gewaschen und über wasserfreiem Natriumsulfat getrocknet.

Die Vorlage wird in ein Reaktionsgefäss mit mechanischem Rührer, Stickstoffspülung, Kühler, Heizung, Thermometer und einer Dosierpumpe zur kontinuierlichen Zugabe der Monomerenbeschickung gegeben. Unter Stickstoffspülung wird die Temperatur der Vorlage auf 110 °C erhöht, so dass das Toluol unter Rückfluss siedet. Dann wird die Monomerenbeschickung während eines Zeitraums von 3 Stunden zur Vorlage in dem Reaktionsgefäss gegeben, wobei gegen Ende der Zugabe die Viskosität der Mischung im Reaktionsgefäss stark zunimmt. Nach weiterem etwa sechstündigem Erhitzen der Mischung auf 110 °C wird auf Raumtemperatur abgekühlt. Das Toluol wird verdampft, das zurückbleibende Copolymer in Ether gelöst, mit Hexan gefällt, abfiltriert und getrocknet.

Das erhaltene Copolymer hat ein Molekulargewicht (M_{w}) von 10330 (gemessen mit GPC unter Verwendung eines Polystyrolstandards; M_{w}/Mₙ = 4,7), eine Glassübergangstemperatur (T_{g}-Wert) von 45,8 °C und weist 1,98 Äquivalente freie Carboxylgruppen pro Kilogramm Copolymer auf.

### Beispiel 2: Herstellung eines Halbesters aus einem Polycaprolactonpolyol und Hexahydrophthalsäureanhydrid.

100 g Hexahydrophthalsäureanhydrid werden zusammen mit 1,6 g Tetramethylammoniumchlorid in ein Reaktionsgefäss mit mechanischem Rührer, Stickstoffspülung und Thermometer gegeben und unter Stickstoff auf 135°C erhitzt. Über einen Zeitraum von 2 Stunden werden tropfenweise 59,97 g CAPA®316 (Polycaprolactonpolyol der Firma Interox Chemicals Ltd. mit einem Molekulargewicht von 1000 und 3,89 Äquivalenten Hydroxylgruppen pro Kilogramm Substanz) zugegeben. Nach Abkühlen erhält man als Reaktionsprodukt eine viskose Flüssigkeit mit einer Viskosität von 40500 mPa.s (bei 67°C), einem T_{g}-Wert von -19°C und 2,61 Äquivalenten freie Carboxylgruppen pro Kilogramm Substanz.

### Beispiel 3: Herstellung von Hexahydrophthalsäurebis(2-oxo-1,3-dioxolan-4-yl)methylester.

1 Mol cis-Hexahydrophthalsäurediglycidylester (6,6 Equ. Epoxid/kg) sowie 0,05 Mol Natriumiodid werden in 500 ml N,N-Dimethylformamid gegeben. Das Gemisch wird bei einer Temperatur von 100°C acht Stunden lang von CO₂-Gas durchströmt. Danach färbt sich die Mischung leicht gelb. Das Lösungsmittel wird danach bei einer Temperatur von 130°C im Rotationverdampfer zur Hälfte abgezogen. Der verbleibende Rest der Reaktionsmischung wird mit Wasser gewaschen, über Natriumsulfat getrocknet und filtriert. Danach wird der Rest des Lösungsmittels wiederum bei 130°C im Rotationsverdampfer abgezogen. Das erhaltenen Produkt ist eine hochviskose gelbe Flüssigkeit. Eine titrimetrische Bestimmung ergibt, dass es 0,03 Equ./kg unumgesetzte Epoxidgruppen enthält.

### Beispiel 4:

Eine Klarlacklösung wird durch Vermischen folgender Bestandteile unter Anwendung einer geringen Scherkraft hergestellt:

| Bestandteile | Menge [g] |
|---|---|
| Methacrylatkomponente aus Beispiel 1 | 6,500 |
| Halbester aus Beispiel 2 | 3,500 |
| Hexahydrophthalsäurebis(2-oxo-1,3-dioxolan-4-yl)methylester | 4,145 |
| 1,8-Diazabicyclo[5,4,0]-7-undecen (Katalysator) | 0,753 |
| Lösungsmittel LMG XI | 13,150 |
| | |
| UV-Absorber (Tinuvin®400) | 0,280 |
| Antioxidans (Tinuvin®123) | 0,146 |
| Verlaufsmittel (Byk® 300) | 0,050 |

Der Festkörpergehalt der Lacklösung beträgt 55 Gewichtsprozent, die Viskosität nach Höppler bei 25°C 300 mPa.s. Der Klarlack wird auf ein Aluminiumsubstrat in einer Schichtdicke von 35 µm aufgebracht. Der Lack zeigt nach einer Härtung unter den in Tabelle 1 angegebenen Bedingungen die ebenfalls in dieser Tabelle aufgeführten Eigenschaften:

**Tabelle 1**

| | | | |
|---|---|---|---|
| Härtung [Temperatur in °C/Zeit in min] | 160/45 | 150/60 | 140/75 |
| Erichsentiefziehtest (DIN 53156) [mm] | 10,0 | 10,0 | 10,0 |
| Schlagverformung R (Al/Al) [kg.cm] ⁴⁾ | 160 | 160 | 80 |
| Härte (nach Persoz) [s] | 192 | 182 | 192 |
| Acetontest⁵⁾ | 3 | 3 | 3 |

| | | | |
|---|---|---|---|
| ⁴⁾ Die Schlagverformung wird bestimmt, indem man einen Stempel bekannter Masse aus bestimmter Höhe auf das beschichtete Substrat fallen lässt. Der angegebene Wert ist das Produkt aus der Masse des Stempels in kg und der grössten Höhe in cm, bei der die Beschichtung noch unbeschädigt bleibt, d.h. unter 10-facher Vergrösserung keine Risse in der Beschichtung festgestellt werden können. Der Zusatz "R" bedeutet, dass der Stempel auf die der Beschichtung abgewandte Seite des Substrats auftrifft. | | | |
| ⁵⁾ Der Acetontest wird als Reibtest folgendermassen durchgeführt: Ein Wattebausch wird mit Aceton getränkt und zwanzigmal auf einem Teil der Beschichtung hin und her gerieben. Das Ergebnis wird gemäss der folgenden fünfteiligen Skala (DIN 53320) beurteilt: 0 = unverändert; 1 = bremsend, nicht mit dem Fingernagel kratzbar; 2 = schwer kratzbar, evtl. Watte gefärbt; 3 = erweicht, leicht kratzbar; 4 = beginnende Ab- oder Auflösung; 5 = vollständige Auflösung. | | | |

### Beispiel 5:

Eine Klarlacklösung wird durch Vermischen folgender Bestandteile unter Anwendung einer geringen Scherkraft hergestellt:

| Bestandteile | Menge [g] |
|---|---|
| Methacrylatkomponente aus Beispiel 1 | 13,000 |
| Halbester aus Beispiel 2 | 7,000 |
| Hexahydrophthalsäurebis(2-oxo-1,3-dioxolan-4-yl)methylester Beispiel 3 | 6,134 |
| cis-Hexahydrophthalsäurediglycidylester (6,6 Equ. Epoxid/kg) | 1,666 |
| 1,8-Diazabicyclo[5,4,0]-7-undecen (Katalysator) | 1,390 |
| Lösungsmittel LMG XI | 21,000 |
| | |
| UV-Absorber (Tinuvin®400) | 0,556 |
| Antioxidans (Tinuvin®123) | 0,278 |
| Verlaufsmittel (Byk® 300) | 0,098 |

Hexahydrophthalsäurebis(2-oxo-1,3-dioxolan-4-yl)methylester) und cis-Hexahydrophthalsäurediglycidylester liegen in dieser Zusammensetzung im Verhältnis 75 zu 25, bezogen auf die (2-Oxo-1,3-dioxolan-4-yl)methyl-Gruppen und die Epoxidgruppen vor.

Der Festkörpergehalt der Lacklösung beträgt 59.3 % Gewichtsprozent, die Viskosität nach Höppler bei 25°C 535 mPa.s. Der Klarlack wird auf ein Aluminiumsubstrat in einer Schichtdicke von 30 µm aufgebracht. Der Lack zeigt nach einer Härtung unter den in Tabelle 2 angegebenen Bedingungen die ebenfalls in dieser Tabelle aufgeführten Eigenschaften:

**Tabelle 2**

| | | | |
|---|---|---|---|
| Härtung [Temperatur in °C/Zeit in min] | 160/30 | 150/30 | 140/60 |
| Erichsentiefziehtest (DIN 53156) [mm] | 10,0 | 10,0 | 10,0 |
| Schlagverformung R (Al/Al) [kg.cm] ⁴⁾ | 160 | 160 | 160 |
| Härte (nach Persoz) [s] | 216 | 221 | 218 |
| Acetontest⁵⁾ | 3 | 3 | 3 |

### Beispiel 6: Herstellung eines Vemetzungsmittels der Formel:

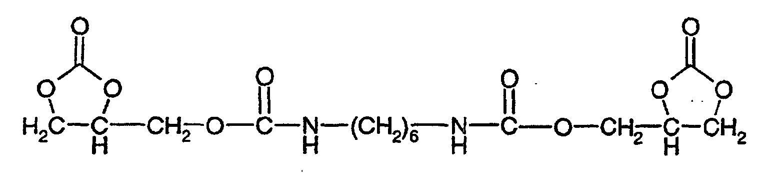

30g (0,254 Mol) Glycerincyclocarbonat (hergestellt gemäss dem U.S.-Patent (US-A-2,915,529) werden in einem Reaktionsgefäss zusammen mit 21,37 (0,127 Mol) Hexamethylendiisocyanat auf ca. 82°C erhitzt. Das Gemisch wird 15 Minuten auf dieser Temperatur gehalten, wobei ein viskoses Produkt entsteht, das ein molekulargewicht von 404 und eine Reinheit von 72% aufweist (bestimmt mit HPLC).

### Beispiel 7:

Eine Klarlacklösung wird durch Vermischen folgender Bestandteile unter Anwendung einer geringen Scherkraft hergestellt

| Bestandteile | Menge [g] |
|---|---|
| Methacrylatkomponente aus Beispiel 1 | 6,500 |
| Halbester aus Beispiel 2 | 3,500 |
| Vernetzungsmittel gemäss Beispiel 6 | 4,450 |
| 1,8-Diazabicyclo[5,4,0]-7-undecen (Katalysator) | 0,723 |
| Lösungsmittel LMG XI | 8,500 |
| Lösungsmittel γ-Butyrolacton | 4,450 |
| UV-Absorber (Tinuvin®400) | 0,289 |
| Antioxidans (Tinuvin®123) | 0,145 |
| Verlaufsmittel (Byk® 300) | 0,031 |

Der Festkörpergehalt der Lacklösung beträgt 48,5 (theoretisch 54,7). Der Klarlack wird warm auf ein Aluminiumsubstrat in einer Schichtdicke von 20 µm aufgebracht. Der Lack zeigt nach einer Härtung unter den in Tabelle 3 angegebenen Bedingungen die ebenfalls in dieser Tabelle aufgeführten Eigenschaften:

**Tabelle 3**

| | |
|---|---|
| Härtung [Temperatur in °C/Zeit in min] | 160/60 |
| Erichsentiefziehtest (DIN 53156) [mm] | 10,0 |
| Schlagverformung R (Al/Al) [kg.cm]⁴⁾ | 140 |
| Härte (nach Persoz) [s] | 131 |
| Acetontest⁵⁾ | 3 |

## Patentansprüche

1. Härtbare Zusammensetzung, die folgende Bestandteile enthält:
(A) eine Polymerkomponente, bestehend aus einem oder mehreren der folgenden Bestandteile:
Polymere auf Basis von Acrylat- und/oder Methacrylatmonomeren, die freie Carboxylgruppen aufweisen, und
carboxylterminierte Polyester;
(B) ein Vernetzungsmittel für die Komponente (A) ausgewählt der Gruppe bestehend aus:
(B1) einer oder mehr als einer Verbindung mit einem Molekulargewicht von weniger als 800, die mindestens zwei (2-Oxo-1,3-dioxolan-4-yl)methyl-Gruppen pro Molekül enthält, und
(B2) einem Gemisch aus einer oder mehr als einer Verbindung mit einem Molekulargewicht von weniger als 800, die mindestens zwei (2-Oxo-1,3-dioxolan-4-yl)-methyl-Gruppen pro Molekül enthält, mit einem oder mehr als einem Epoxidharz, wobei zumindest 60 Prozent der Gesamtanzahl von (2-Oxo-1,3-dioxolan-4-yl)-methyl- und Epoxidgruppen des Gemisches (2-Oxo-1,3-dioxolan-4-yl)methyl-Gruppen sind;
(C) einen Katalysator zur Beschleunigung der Vernetzungsreaktion zwischen den Komponenten (A) und (B) und
(D) ein Lösungsmittel für die Komponenten (A), (B) und (C);
wobei das molare Verhältnis von freien Carboxylgruppen zur Gesamtanzahl von (2-Oxo-1,3-dioxolan-4-yl)methyl- und Epoxidgruppen in der Zusammensetzung 0,3 bis 3 beträgt.

2. Zusammensetzung nach Anspruch 1, **dadurch gekennzeichnet, dass** die Komponente (B) (2-Oxo-1,3-dioxolan-4-yl)methyl-Verbindungen der Formel (I) umfasst: 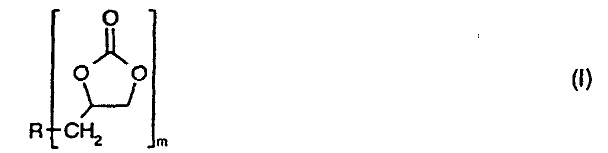 worin
m eine ganze Zahl ist, die gleich 2 oder grösser als 2 ist, und
R eine Gruppe der Formel (II): 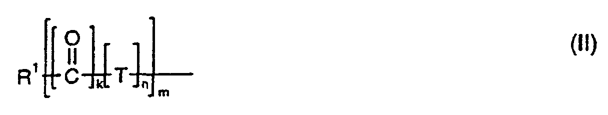
bedeutet, worin
k und
n unabhängig voneinander gleich 0 oder 1 sind und worin
T in jeder der m Gruppen der Formel 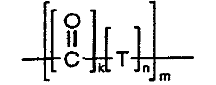 unabhängig voneinander einer Gruppe der Formel -O-, - NH- oder -N< entspricht, und
R¹ für einen m-wertigen organischen Rest steht, der ein Molekulargewicht von 28 bis 800 minus m·(101 + 28·k + MG_{T}·n) aufweist, wobei MG_{T} dem Molekulargewicht der Gruppen T entspricht.

3. Zusammensetzung nach einem der Ansprüche 1 oder 2, **dadurch gekennzeichnet, dass** die Polymerkomponente (A) ein Gemisch darstellt, bestehend aus:
(A1) mindestens einem Polymer auf Basis von Acrylat- und/oder Methacrylatmonomeren, das durchschnittlich 0,1 bis 4,0 Äquivalente freie Carboxylgruppen pro Kilogramm Polymer aufweist, und
(A2) mindestens einem carboxylterminierten Polyester, der durchschnittlich 0,2 bis 6 Äquivalente freie Carboxylgruppen pro Kilogramm Polyester aufweist.

4. Zusammensetzung nach einem der Ansprüche 1 bis 3. **dadurch gekennzeichnet, dass** die Polymerkomponente (A) einen Halbester mit einem Molekulargewicht (Gewichtsmittel Mw) von 500 bis 5000 und einer Glasübergangstemperatur unter 30°C umfasst. mit der Formel: 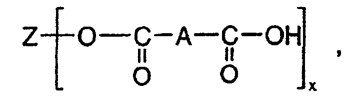 worin
Z den Rest eines Polyester- oder Polylactonpolyols der Formel Z(OH)ₓ ohne seine terminalen Hydroxylgruppen darstellt,
A den Rest einer von ihren 1,2-ständigen Carboxylgruppen befreiten 1,2-Carbonsäure der Formel A(COOH)₂ symbolisiert, und
x eine ganze Zahl von mindestens 2 ist.

5. Zusammensetzung nach Anspruch 4, **dadurch gekennzeichnet, dass**
A den Rest einer cycloaliphatischen 1,2-Carbonsäure darstellt.

6. Zusammensetzung nach Anspruch 4 oder 5, **dadurch gekennzeichnet, dass**
Z den Rest eines Polylactonpolyols der Formel: 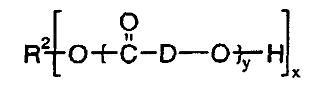
darstellt, worin
R² dem Rest eines x-wertigen Initiatorpolyols R²(OH)ₓ ohne seine Hydroxylgruppen darstellt,
x die in Anspruch 4 angegebenen Bedeutung hat,
y 1 oder eine ganze Zahl grösser als 1 bedeutet und
D einer Alkylengruppe der Struktur 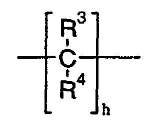 mit insgesamt maximal 12 Kohlenstoffatomen entspricht, wobei
R³ und
R⁴ unabhängig voneinander ein Wasserstoffatom oder einen C₁-C₃-Alkylrest darstellen und
h eine ganze Zahl von 5 bis 8 ist.

7. Zusammensetzung nach Anspruch 6, **dadurch gekennzeichnet, dass**
h gleich 5 ist und
R³ und
R⁴ beide ein Wasserstoffatom darstellen.

8. Zusammensetzung nach einem der Ansprüche 6 oder 7, **dadurch gekennzeichnet, dass**
x gleich 2 oder 3 ist.

9. Zusammensetzung nach einem der Ansprüche 1 bis 8, **dadurch gekennzeichnet, dass die** Komponente (B) aus einer oder mehr als einer Verbindung besteht, ausgewählt aus:
(2-Oxo-1,3-dioxolan-4-yl)methylestern aliphatischer Dicarbonsäuren mit 4 bis 8 Kohlenstoffatomen;
(2-Oxo-1,3-dioxolan-4-yl)methylestern von Benzoldi- oder Benzoltricarbonsäuren;
(2-Oxo-1,3-dioxolan-4-yl)methylestern von Cyclohexandi- und Cyclohexantricarbonsäuren;
1,4-Bis-(2-oxo-1,3-dioxolan-4-yloxy)butan;
2,2-Bis-(2-oxo-1,3-dioxolan-4-yloxymethyl)-1-(2-oxo-1,3-dioxolan-4-yloxy)butan;
1-[2,2-Bis-(2-oxo-1,3-dioxolan-4-yloxymethyl)butoxy]-2-(hydroxymethyl)-2-(2-oxo-1,3-dioxolan-4-yloxymethyl)dutan; und
Bis-{[(2-oxo-1,3-dioxolan-4-yl)methyl]oxymethyl}cyclohexan.

10. Zusammensetzung nach einem der Ansprüche 1 bis 9, **dadurch gekennzeichnet, dass** es als Vernetzungsmittel für die Komponente (A) nur Poly[(2-oxo-1,3-dioxolan-4-yl)methyl]-Verbindungen enthält,

11. Verfahren zur Lackierung von Gegenständen, insbesondere von Automobilteilen, bei dem der Gegenstand mit einer Zusammensetzung nach einem der Ansprüche 1 bis 10 beschichtet wird und die Beschichtung getrocknet und bei einer Temperatur von 100 bis 200°C, vorzugsweise von 120 bis 180°C, gehärtet wird.

## Claims

1. A curable composition, which comprises the following components:
(A) a polymer component consisting of one or more than one of the following components:
polymers based on acrylate monomers and/or methacrylate monomers containing free carboxyl groups, and carboxyl-terminated polyesters;
(B) a crosslinker for component (A) selected from the group consisting of:
(B1) one or more than one compound having a molecular weight of less than 800 and containing at least two (2-oxo-1,3-dioxolan-4-yl)methyl groups per molecule, and
(B2) a mixture consisting of one or more than one compound having a molecular weight of less than 800 and containing at least two (2-oxo-1,3-dioxolan-4-yl)-methyl groups per molecule, and of one or more than one epoxy resin, at least 60 percent of the total number of (2-oxo-1,3-dioxolan-4-yl)methyl groups and epoxy groups of the mixture being (2-oxo-1,3-dioxolan-4-yl)methyl groups;
(C) a catalyst for accelerating the crosslinking reaction between the components (A) and (B), and
(D) a solvent for the components (A), (B) and (C);
the molar ratio of free carboxyl groups to the total number of (2-oxo-1,3-dioxolan-4-yl)methyl groups and epoxy groups in the composition being from 0.3 to 3.

2. A composition according to claim 1, wherein component (B) comprises (2-oxo-1,3-dioxolan-4-yl)methyl compounds of formula (I): 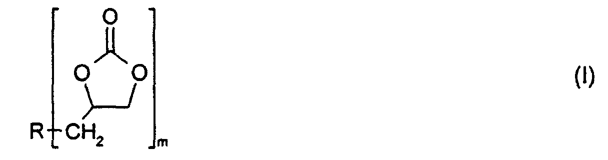 wherein
m is 2 or an integer higher than 2, and
R is a group of formula (II): 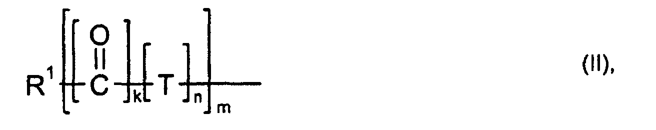
wherein
k and
n are each independently of the other 0 or 1 and wherein
T in each of the m groups of formula 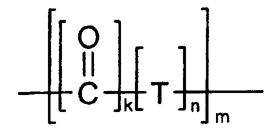 corresponds independently of each other to a group of formula -O-, - NH- or -N< , and
R¹ is an m-valent organic radical having a molecular weight of 28 to 800 minus m·(101 + 28·k + MG_{T}·n), wherein
MG_{T} corresponds to the molecular weight of the groups T.

3. A composition according to claim 1 or 2, wherein the polymer component (A) is a mixture consisting of:
(A1) at least one polymer based on acrylate monomers and/or methacrylate monomers and containing an average of 0.1 to 4.0 equivalents of free carboxyl groups per kilogram of polymer, and
(A2) at least one carboxyl-terminated polyester containing an average of 0.2 to 6 equivalents of free carboxyl groups per kilogram of polyester.

4. A composition according to any one of claims 1 to 3, wherein the polymer component (A) comprises a semiester having a molecular weight (average weight Mw) from 500 to 5,000 and a glass transition temperature of less than 30°C and which has the formula: 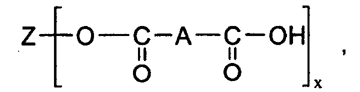 wherein
Z is the radical of a polyester polyol or polylactone polyol of formula Z(OH)ₓ without its terminal hydroxyl groups,
A is the radical of a 1,2-carboxylic acid of formula A(COOH)₂ freed of its 1,2-terminal carboxyl groups, and
x is an integer of at least 2.

5. A composition according to claim 4, wherein A is the radical of a cycloaliphatic 1,2-carboxylic acid.

6. A composition according to claim 4 or 5, wherein Z is the radical of a polylactone polyol of formula: 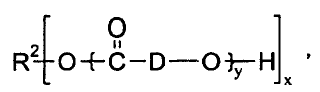 wherein
R² is the radical of an x-valent initiator polyol R²(OH)ₓ without its hydroxyl groups,
x has the meaning as in claim 4,
y is 1 or an integer higher than 1, and
D is an alkylene group of the structure 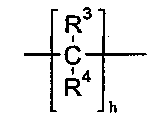 having a total of at most 12 carbon atoms, wherein
R³ and
R⁴ are each independently of the other a hydrogen atom or a C₁-C₃alkyl radical,
and
h is an integer from 5 to 8.

7. A composition according to claim 6, wherein
h is 5, and
R³ and
R⁴ are both a hydrogen atom.

8. A composition according to claim 6 or 7, wherein
x is 2 or 3.

9. A composition according to any one of claims 1 to 8, wherein component (B) consists of one or more than one compound selected from:
(2-oxo-1,3-dioxolan-4-yl)methyl esters of aliphatic dicarboxylic acids containing 4 to 8 carbon atoms;
(2-oxo-1,3-dioxolan-4-yl)methyl esters of benzenedi- or benzenetricarboxylic acids;
(2-oxo-1,3-dioxolan-4-yl)methyl esters of cyclohexanedi- and cyclohexanetricarboxylic acids;
1,4-bis(2-oxo-1,3-dioxolan-4-yloxy)butane;
2,2-bis(2-oxo-1,3-dioxolan-4-yloxymethyl)-1-(2-oxo-1,3-dioxolan-4-yloxy)butane;
1-[2,2-bis(2-oxo-1,3-dioxolan-4-yloxymethyl)butoxy]-2-(hydroxymethyl)-2-(2-oxo-1,3-dioxolan-4-yloxymethyl)butane; and
bis{[(2-oxo-1,3-dioxolan-4-yl)methyl]oxymethyl}cyclohexane.

10. A composition according to any one of claims 1 to 9, wherein the crosslinkers used for component (A) are exclusively poly[(2-oxo-1,3-dioxolan-4-yl)methyl] compounds.

11. A process for coating objects, in particular automotive parts, which comprises coating the object with a composition according to any one of claims 1 to 10, drying the coating and curing it at a temperature in the range from 100 to 200°C, preferably from 120 to 180°C.

## Revendications

1. Composition durcissable, qui contient les constituants suivants :
(A) un composant polymère, constitué d'un ou plusieurs des constituants suivants :
des polymères à base d'acrylates et/ou de méthacrylates monomères, qui contiennent des groupes carboxyle libres, et
des polyesters à terminaison carboxyle ;
(B) un agent de réticulation pour le composant (A), choisi dans l'ensemble comprenant :
(B1) un ou plusieurs composés ayant une masse moléculaire inférieure à 800, qui contiennent par molécule au moins deux groupes (2-oxo-1,3-dioxolanne-4-yl)méthyle, et
(B2) un mélange d'un ou plusieurs composés ayant une masse moléculaire inférieure à 800, qui contiennent par molécule au moins deux groupes (2-oxo-1,3-dioxolanne-4-yl)méthyle, et d'une ou plusieurs résines époxydes, au moins 60 % du nombre total des groupes (2-oxo-1,3-dioxolanne-4-yl)méthyle et des groupes époxy du mélange étant des groupes (2-oxo-1,3-dioxolanne-4-yl)méthyle ;
(C) un catalyseur pour accélérer la réaction de réticulation entre les composants (A) et (B), et
(D) un solvant pour les composants (A), (B) et (C) ; le rapport en moles entre les groupes carboxyle et
le nombre total de groupes (2-oxo-1,3-dioxolanne-4-yl)méthyle et de groupes époxy dans la composition étant de 0,3 à 3.

2. Composition selon la revendication 1, **caractérisée en ce que** le composant (B) contient des composés contenant des groupes (2-oxo-1,3-dioxolanne-4-yl)méthyle de f ormule (I) : 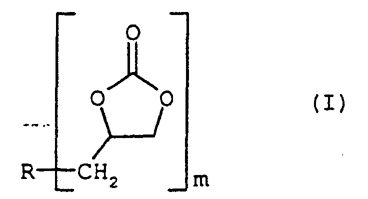 dans laquelle
m est un nombre entier, supérieur ou égal à 2, et
R est un groupe de formule (II) : 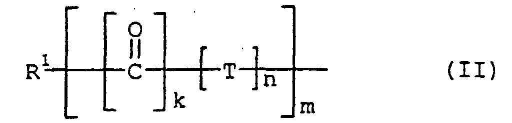
dans laquelle
k et n représentent chacun indépendamment de l'autre un nombre égal à 0 ou à 1, et
chacun des radicaux T, dans chaque des m groupes de formule 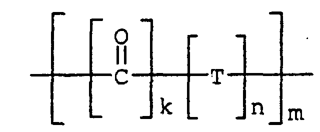 représente indépendamment des autres un groupe de formule - O-, -NH- ou -N<, et
R¹ est un radical organique m-valent, qui a une masse moléculaire de 28 à 800, moins m(101+28k + MG_{T}.n), où MG_{T} est la masse moléculaire des groupes T.

3. Composition selon l'une des revendications 1 ou 2, **caractérisée en ce que** le composant polymère (A) est un mélange constitué
(A1) d'au moins un polymère à base d'acrylates et/ou de méthacrylates monomères, qui en moyenne contient de 0,1 à 4,0 équivalents de groupes carboxyle par kilogramme de polymère, et
(A2) d'au moins un polyester à terminaison carboxyle, qui contient en moyenne de 0,2 à 6 équivalents de groupes carboxyle libres par kilogramme de polyester.

4. Composition selon l'une des revendications 1 à 3, **caractérisée en ce que** le composant polymère (A) comprend un semi-ester ayant une masse moléculaire (moyenne en masse M_{w}) de 500 à 5000 et une température de transition vitreuse inférieure à 30°C, ayant la formule 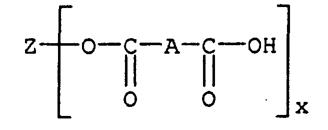 dans laquelle
Z est le résidu d'un polyester- ou d'un polylactonepolyol de formule Z(OH)ₓ, sans ses groupes hydroxyle terminaux,
A représente le résidu d'un acide 1,2-carboxylique, débarrassé de ses groupes carboxyle en position 1,2, de formule A(COOH)₂, et
x est un nombre entier valant au moins 2.

5. Composition selon la revendication 4, **caractérisée en ce que** A est le résidu d'un acide 1,2-carboxylique cycloaliphatique.

6. Composition selon la revendication 4 ou 5, **caractérisée en ce que** Z est le résidu d'un polylactonepolyol de formule 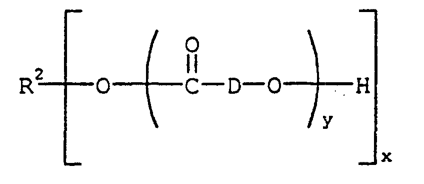 dans laquelle
R² est le résidu d'un polyol amorceur x-valent R²(OH)ₓ, sans ses groupes hydroxyle,
x a la signification donnée dans la revendication 4,
y vaut 1 ou est un nombre entier supérieur à 1, et
D est un groupe alkylène de structure 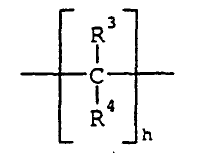
avec en tout au plus 12 atomes de carbone,
R³ et R⁴ représentant chacun indépendamment de l'autre un atome d' hydrogène ou un groupe alkyle en C₁-C₃, et
h étant un nombre entier de 5 à 8.

7. Composition selon la revendication 6,
**caractérisée en ce que**
h vaut 5, et
R³ et R⁴ représentent chacun un atome d'hydrogène.

8. Composition selon l'une des revendications 6 ou 7, **caractérisée en ce que** x vaut 2 ou 3.

9. Composition selon l'une des revendications 1 à 8, **caractérisée en ce que** le composant (B) est constitué d'un ou plusieurs composés choisis parmi :
les esters (2-oxo-1,3-dioxolanne-4-yl)méthyliques d'acides dicarboxyliques aliphatiques,
ayant de 4 à 8 atomes de carbone ;
les esters (2-oxo-1,3-dioxolanne-4-yl)méthyliques des acides benzènedi- ou benzènetricarboxyliques ;
les esters (2-oxo-1,3-dioxolanne-4-yl)méthyliques d'acides cyclohexanedi- et cyclohexanetricarboxyliques ;
le 1,4-bis(2-oxo-1,3-dioxolanne-4-yloxy)butane ;
le 2,2-bis(2-oxo-1,3-dioxolanne-4-yloxyméthyl)-1-(2-oxo-1,3-dioxolanne-4-yloxy)butane ;
le 1-[2,2-bis(2-oxo-1,3-dioxolanne-4-yloxyméthyl)-butoxy]-2-(hydroxyméthyl)-2-(2-oxo-1,3-dioxolanne-4-yloxyméthyl)butane ; et
le bis{[(2-oxo-1,3-dioxolanne-4-yl)méthyl]oxyméthyl}-cyclohexane.

10. Composition selon l'une des revendications 1 à 9, **caractérisée en ce que**, en tant qu'agent de réticulation pour le composant (A), elle ne contient que des composés poly[(2-oxo-1,3-dioxolanne-4-yl)méthylés].

11. Procédé pour laquer des objets, en particulier des pièces pour automobiles, dans lequel l'objet est revêtu d'une composition selon l'une des revendications 1 à 10, et le revêtement est séché, et est durci à une température de 100 à 200°C, de préférence de 120 à 180°C.
